# EUROPEAN PATENT APPLICATION

(11) **EP 4 325 042 A1**
(43) Date of publication of application: **21.02.2024**
(21) Application number: 22190619.1
(22) Date of filing: 16.08.2022
(51) Int. Cl.: F02K 5/00, B65G 1/04, B65G 1/06, B65G 1/137

(54) **ORDER FULFILLMENT SYSTEM WITH A FLOOR-BASED ORDER FULFILMENT AREA HAVING AT LEAST ONE PICKING STATION**

(71) Applicant: Dematic GmbH, 63150 Heusenstamm (DE)
(72) Inventor: YAMASHITA, Shin, 61440 Oberursel (DE)
(74) Representative: Moser Götze & Partner Patentanwälte mbB

(57) **Abstract**

Order fulfillment system with a floor-based order fulfilment area in which at least one picking station is arranged, wherein the picking station includes source item providing means and order collection providing means, such that orders may be fulfilled by picking from source item means and placed into order collection means and wherein the source item providing means and/or the order collection providing means are autonomous mobile robots (AMR) and/or automated guided vehicles (AGV) both having a transportation platform that are controlled by a controller to be present at a certain picking station in order to allow the picking operation, wherein in that the transportation platform of the autonomous mobile robots (AMR) and/or the automated guided vehicles (AGV) has an adaptive dynamic height and/or tilting and/or orientation control mechanism that is controlled by the controller to dynamically present the source item means and the order collection means at an ergonomic respective efficient height and/or tilted angle and/or orientation to the manual operator and/or robotic picking device performing the picking operation.

## Description

The invention relates to an order fulfillment system according to claim 1.

Order fulfillment includes picking. Picking is the collection of items from a warehouse assortment and their compilation into an order. Picking is known from sales-oriented customer orders and also internal orders.

In order picking, order pickers can, on the one hand, collect items from the warehouse, picking out items that are statically stored in the warehouse. This is referred to as the "man to goods" principle, since the picker assembles the items "on foot."

On the other hand, during picking, the items can also be brought from the warehouse to the picker. This is referred to as the "goods to man" principle. In this case, systems with dynamic item provisioning are preferred, in which the picker occupies a fixed workstation in a picking station and is supplied with items there. In most cases, the articles are provided in storage bins containing a large number of identical articles.

In this process, the picking container to be filled with the items is placed at a picking station where it is filled with the items. At these workstations, often referred to as base stations, auxiliary means are also provided for the order picker, such as computer support, scanners, etc. In this context, it is known to arrange around the workstation storage locations for storage containers for the storage and/or removal of the articles to be picked.

Such systems have high throughput but require heavily on fixed infrastructure which is however costly and not flexible both in scaling throughput and layout change. It also worsens maintenance access to storage system.

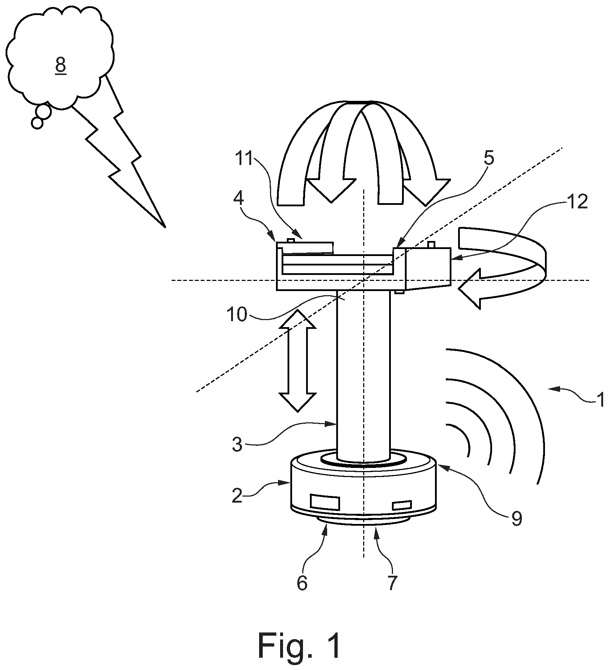

WO 2008/085638 A2 describes the use of mobile shelves to provide a manual picking station with inventory and/or order containers. The picker is stationary at a certain location, the picking station, and the infrastructure is not fixed but flexible by use of the mobile shelves (see page 7 bottom, page 19, page 25, figure 1, "50").

US 2017/336780 A1 describes an automated approach in a system for order fulfillment by using one or more robots. The system includes a server configured to receive an order comprising an order item; inventory storage operably connected to the server, the inventory storage comprising order items; an actor robot operably connected to and selected by the server, the actor robot configured to perform one or more of picking the order item from inventory storage, moving the order item, and positioning the order item; and an order robot operably connected to the server, the order robot configured to collect the order item, wherein the order item is positioned by the actor robot so as to be accessible to the order robot, so as to perform order fulfillment using one or more robots.

WO 2017/216127 A1 discloses a warehousing and order-picking system which is operated according to a rendezvous order-picking principle in which goods which are to be picked are removed at positionally variable order-picking stations according to customer orders from source containers and are delivered into target containers, and which comprises: a multiplicity of vehicles for transporting the source containers and the target containers within the system; a storage area where a multiplicity of the source containers are stored, preferably in shelves; an action area in which the vehicles move, preferably autonomously; a positionally variable order-picking station which has a variable relative position within the action area, which position changes repeatedly over time as a function of the customer order, and at which order-picking station rendezvous order-picking is carried out by means of an order-picking person and/or and an order-picking robot; and a control device which is configured for the rendezvous order-picking in that the relative position and associated transportation orders for the vehicles are determined in a way which is optimized by the control device, wherein the transportation orders for the vehicles define synchronized and positionally coordinated convergence of a customer-order-specific number of the source containers and of a customer-order-specific number of the target containers at the variable order-picking station.

CN 107640569 A describes a height-adaptive article transport equipment. The height-adaptive article transport equipment comprises a carrying device, a communication device and a height-adjusting device. One or a plurality of to-be-transported articles can be carried by the carrying device. The heights of receiving ends of transfer devices matched with the height-adaptive article transport equipment can be learned by the height-adaptive article transport equipment by the aid of the communication device; the height of the carrying device can be adjusted to be matched with the receiving ends by the height adjusting device when the height-adaptive article transport equipment approaches the transfer devices.

Therefore, it is an objective of the invention to provide an order fulfillment system with a floor-based order fulfilment area that allows for flexibility of layout and number of picking stations to cope with throughput and routing need fluctuations.

In other words, and according to the invention, the transportation platform of the autonomous mobile robots (AMR) and/or the automated guided vehicles (AGV) has an adaptive dynamic height and/or tilting mechanism that is controlled by the control to dynamically present the source item and the order collection means at an ergonomic height and/or tilting angle and/or orientation to the manual operator performing the picking operation. If robotic picking is used, the mentioned presentation of the order collection increases robotic performance and efficiency as only a minimum heigh difference and/or path between source item means and order collection means needs to be taken by the robot. Tilting of the source item means helps settle product inside of the means (tote, tray etc.) for quicker vision scanning and immediate grabbing by the robotic picking device. This also increases its reliability as product by means of settling the product and also better visibility for vision system. If vision does not recognize the targeted item, different presentation can be provided by changing tilting angle and orientation and the mechanism can even shuffle the contents.

This allows not only flexible layout by virtually creating picking stations as needed by using the AMR/AGV as adhoc picking stations but also providing superior ergonomics and efficiency at the same time that rival or are at least as good as those of stationary systems. This allows flexibility with high and scalable throughput.

Automated guided vehicles (AGV) are defined as mobile self-driving transportation platforms that usually follow given routes e. g. along marked long lines or wires on the floor, or uses radio waves, vision cameras, magnets, or lasers for navigation and transport objects, usually - but not limited to - in the form of pallet loads. They have the ability to automatically move and pick objects in manufacturing facilities and distribution centers, warehouses based on predefined routes etc. An autonomous mobile robot (AMR) is similar to an AGV. An AMR is usually more sophisticated than an AGV and is able to navigate dynamically as well as plan its own path. It is usually equipped with on board devices to understand and react to the operating environment. This gives it a high flexibility in multiple order fulfillment use applications. They both transport items to and from a location.

The control may be adapted to control the adaptive dynamic height mechanism to an ergonomic height for the operator or efficient height for a robotic picking means, both also in dependence of item to be picked and/or order collection means. This can further improve ergonomics or efficiency.

The control may be adapted to control the adaptive dynamic height mechanism to lower transport platform such that it can pass underneath conventional infrastructure, such as conveyor lines. This simplifies routing of the AMR/AGV on the floor without need for deviations due to fixed infrastructure and allows for higher flexibility of the routing.

The control may be adapted to control the tilting mechanism to tilt the transportation platform in relation to a horizontal plane towards the manual operator or robotic picking device, preferably in 4-directions in relation to a vertical central axis. This allows for ergonomic or efficient presentation of the item(s) on the transportation platform even if they are in a walled container.

The transportation platform may additionally have a rotation mechanism to rotate the transportation platform in relation to a vertical central axis. This allows for ergonomic or efficient presentation of the item(s) (e. g. in a walled container) to be presented at the closest distance for easier and quicker picking even if they are originally in a corner farther away. Such may be combined with a vision system to input the position of the item(s) to be picked to the control for use in controlling the rotation mechanism.

The transportation platform having a conveying means, preferably belt, rollers or ball (multidirectional). This facilitates the discharge or uptake of source item providing means and/or order collection providing means.

The at least one picking station may have an additional robotic picking means. This may for example be a multi-axis-robotic arm with a gripper and vision system, so that it may be controlled by the control with the input from the vision system, for example to handle heavy items.

The system may comprise a storage for source items and the control may be adapted to control the storage to provide the source item providing means with source items, preferably via discharge stations to AMR/AGV or via conveyors to the at least one picking station.

Preferably the storage is a rack-based storage having multi-level storage racks in a back-to-back arrangement providing single, double or multi-deep storage spaces for totes, trays etc. (item storage or providing means). The racks may be separated by aisles along the length of the racks. In the aisles, shuttles may serve and discharge the storage spaces within the racks travelling along the racks on each level. The shuttles may in turn cooperate with vertical lifts having transportation platforms for lifting and lowering item storage means. At a discharge and storage level the vertical lifts may interface with storage and discharge stations by conventional conveyors so that the AMR/AGV may be provided with items and/or such may be returned to storage at these stations. Alternatively, the conveyers may directly be connected in a conventional way to fixed infrastructure of picking stations. It is also possible for the AMR /AGV to directly interface with the respective vertical lift without use of storage and discharge stations.

The floor-based order fulfilment area may have a flexible layout in respect of the position of the picking stations and/or routes of the AMR and/or AGV. This allows for changes on the fly due to changing necessities.

The control may be adapted to increase or decrease the number of picking stations flexibly in respect to throughput or picking requirements to cope with fluctuation thereof.

For maintenance and/or cleaning purposes, it is even possible that the control is adapted to fully clear the floor-based order fulfilment area of picking stations and/or AMR and/or AGV.

The use of an autonomous mobile robot (AMR) and/or an automated guided vehicle (AGV) allows for flexible use of available space and change of routing when needed in contrast to structured technology (fixed infrastructure).

Automated guided vehicles (AGV) are defined as mobile self-driving transportation platforms that usually follow given routes e. g. along marked long lines or wires on the floor, or uses radio waves, vision cameras, magnets, or lasers for navigation and transport objects, usually - but not limited to - in the form of pallet loads, totes, trays etc. They have the ability to automatically move and pick objects in manufacturing facilities and distribution centers, warehouses based on predefined routes etc. An autonomous mobile robot (AMR) is similar to an AGV. An AMR is usually more sophisticated than an AGV and is able to navigate dynamically as well as plan its own path. It is usually equipped with on board devices to understand and react to the operating environment. This gives it a higher flexibility in multiple order fulfillment use applications. They both transport items to and from a location.

It is preferred that finished order collection means are automatically discharged by means of said AMR and/or AGV from manual packing station in said supply level. In other words, the AMR and /or AGV are used not only for supply or sourcing of items to the station but also for discharge of finished order carriers and then possibly the transportation to a packing and/or shipping area.

In other words, it is preferred that the at least one picking station is a virtual picking station, meaning that it is formed by at least two AMR and /or AGV being present at a location of the manual picker/operator or robotic picking device performing the picking operation; one of which presents the source item means and the other presenting the order collection means. Obviously, it is also possible to combine a single function (i. e. source item providing or order collection providing) provided by AMR and /or AGV and the other function by fixed installations.

On the other hand, it is possible to only partly virtualize the picking station by using a combination of fixed installations for order collection providing or source item providing and either source item providing or order collection providing using an AMR and /or AGV. Further details of the invention will now be explained with reference to the figures, in which:
Fig. 1 schematically shows an AMR for use in the invention;
Fig. 2 schematically shows and order fulfillment system according to the invention in a first embodiment;
Fig. 3 schematically shows and order fulfillment system according to the invention in a second embodiment.

Figure 1 shows an AMR 1 having a base 2, a height adjustable mast 3 attached to the top of the base 2 and a tiltable and/or rotatable transport platform 4 attached on top of the mast 3. The transport platform 4 includes a bidirectional driven belt/high friction roller conveyor 5, that is controlled by a controller 6 located in the base 2 to be able to accept or discharge item providing means or order collection means.

The base 2 further contains drive means 7, e. g. omni directional wheels, to propel the AMR under the control of controller 6. The controller 6 has wireless communication means to communicate with central warehouse and order fulfilment control 8, e. g. WMS, so as to receive instructions (orders etc.) and exchange status and so on.

The controller 6 also interfaces with localization sensors 9 for self-navigation in the floor-based order fulfilment area.

The AMR 1 is a vehicle that uses on-board localization sensors 9 and processors or controllers 6 to autonomously move item providing means or order collection means without the need for physical guides or markers. As such the AMR 1 also includes, but is not shown, a battery, drive motors, additional sensors and a camera.

The AMR 1 may navigate using a dynamic or static map of the floor-based order fulfilment area and plans its own routes to the destination, e. g. the (changing) location of the picker.

Additionally, the AMR 1 includes collision sensors to avoid hitting obstacles or other AMR's or humans.

The AMR may also interface with each other via M-2-M communication using the wireless communication means.

Mast 3 includes an adaptive dynamic height adjustment mechanism 10. The height adjustment mechanism 10 is based on the item, item providing means (container wall height) and virtual GTP height. It dynamically adjusts mast height under control of controller 6. The mast height adjustment mechanism 10 includes an actuator e.g. pneumatic mechanism to raise and lower the transport platform 4 attached on top of the mast 3 by extending or shortening the mast length elements slidingly arranged in a telescoping manner not limited to, e. g. pentagraph to achieve best possible presentation of the corresponding item providing means or order collection means.

The top of the mast 3 also includes an adaptive dynamic tilting mechanism 11 and an orientation adjustment mechanism 12.

The dynamic tilting mechanism 11 allows tilting of the transport platform 4 together with the conveyor 5 in both directions (see arrows in figure 1) vs. a horizontal plane. In the present embodiment the tilting is performed in both directions via an actuator e. g. servo-gear-motor for each direction, both under the control of controller 6, as for the height adjustment. This allows the presentation of the corresponding item providing means or order collection means such that the picker has a better view into the respective means and better access.

The orientation adjustment mechanism 12 allows rotation of the transport platform 4 around the central vertical axis of the mast 3 (see arrow in figure 1) using an actuator e. g. servo-gear-motor too, under the control of controller 6 as before. This allows the presentation of the corresponding item providing means or order collection means such that the picker has a better access to an item as it will be oriented closest and/or easiest to him or vice versa for a respective put position within the order collection means.

The controller 6 adaptively and dynamically controls the height, tilting and orientation adjustment mechanisms 10, 11, 12 so that an ergonomic presentation of the corresponding item providing means or order collection means is achieved. This will also be performed based on the picker's preferences, height, arm length, picking style e. g. right handed or left handed etc. which can all be stored in a profile for the picker and used for the adaptive dynamic control at the virtual GTP formed by the AMRs. The storage of the profile can be in the control 8 and be exchanged with the respective AMR when it receives its instructions.

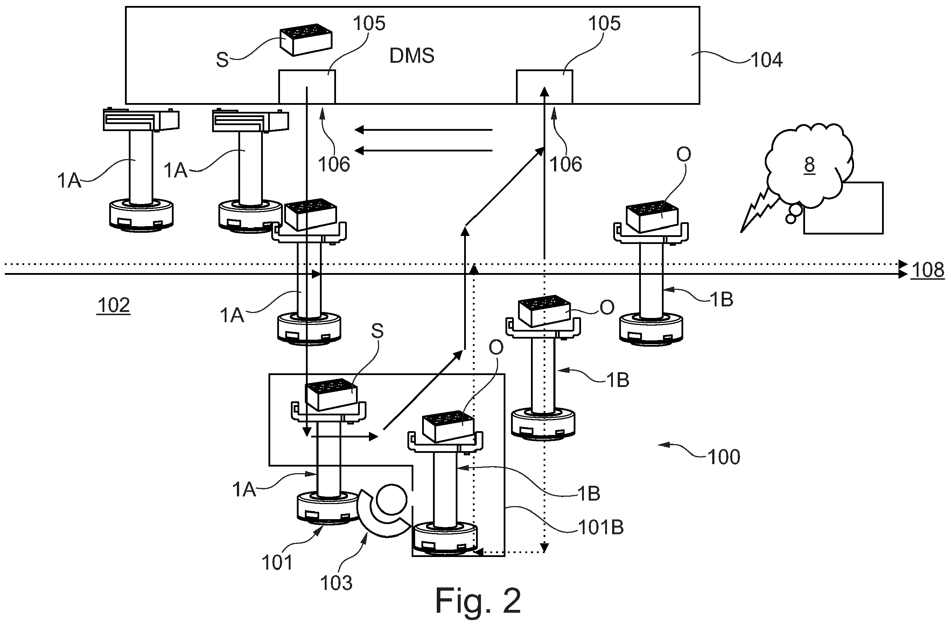

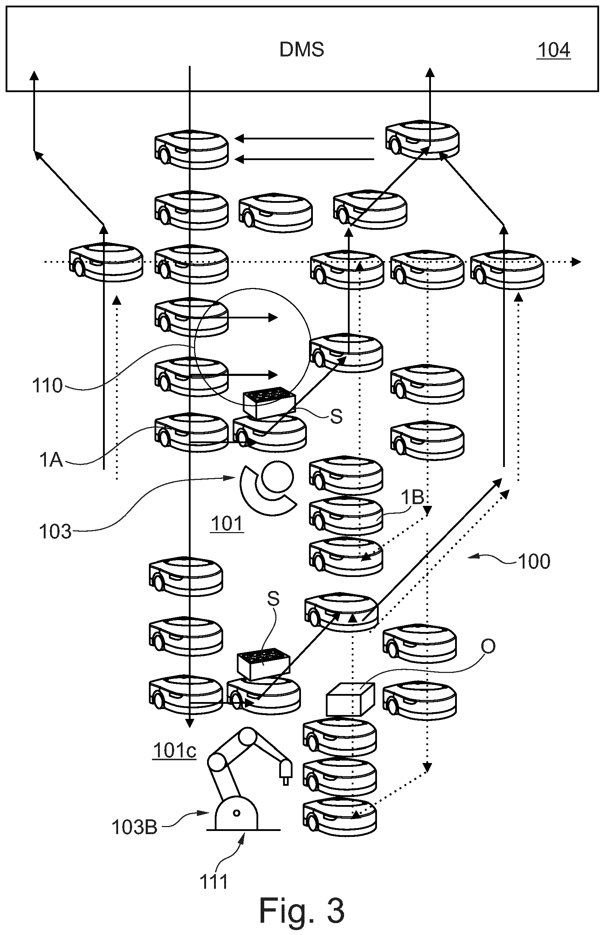

Figure 2 details how AMRs 1 can be flexibly used in the order fulfillment system 100 to provide ad-hoc or virtual goods-to-person picking stations 101 on a floor-based order fulfilment area 102 by having both a first AMR 1A transporting a source item providing means S and a second AMR 1B transporting an order collection means O being at a certain location of the picker 103 at the same time, such that orders may be fulfilled by picking from source item providing means S and placing such item into the order collection means O, either by the manual operator 103 (or a robotic picking device, see figure 3).

The order collection means O and source item providing means S are both walled rectangular containers in the present case. The source item providing means S are stored in a DMS 104, i. e. the storage is a rack-based storage having multi-level storage racks in a back-to-back arrangement providing single, double or multi-deep storage spaces for totes, trays, cartons etc. (item storage or providing means). The racks are separated by aisles along the length of the racks. In the aisles, shuttles serve and discharge the storage spaces within the racks travelling along the racks on each level. The shuttles in turn cooperate with vertical lifts 105 having transportation platforms for lifting and lowering item storage means. At a discharge and storage level the vertical lifts may interface with storage and discharge stations 106 by conventional conveyors so that the AMR 1A may be provided with items or such may be returned to storage at these stations.

The whole system 100 is controlled centrally by the central warehouse and order fulfilment control 8 or controlled by distributed control among AMR's.

The material handling flow of source items providing means indicated by solid arrows, that of order collection means is indicated by hashed arrows.

The virtual goods-to-person picking stations 101 indicated also by the L-shaped area 101B will be dynamically formed by the picker 103 being located at a certain position on the floor-based order fulfilment area 102. This position may be static or change during working hours. In any case, the picker may actively inform the control system of his position, e. g. using a handheld device or augmented reality device etc. Alternatively, such devices may be passively localized by the control system.

When a picker 103 indicates his availability to perform order fulfilment, e. g. when his shift starts, the system 100 will start to allocate orders to his position defining a virtual GTP 101 under the control of control 8.

Source item providing means S will be discharged from the DMS 104 to AMR 1A. AMR 1A will have received instructions to transport this source item providing means S to virtual GTP 101 in area 101B. The navigation and collision avoidance will be performed by local onboard controller 6.

Similarly, AMR 1B will be carrying an order collection means O and have received instructions to transport this order collection means O to virtual GTP 101 in area 101B.

Both AMR 1A and 1B are given a time frame slot at which time they should both be within area 101B to allow the picking operation without delay. Other AMR will be instructed to leave area 101B or que in a waiting zone.

When both AMR 1A and 1B arrive at virtual GTP 101 in area 101B they use the information of the picker profile and item as well as container information to each control presentation of the respective means using controller 6 adaptively and dynamically to control the height, tilting and orientation adjustment mechanisms 10, 11, 12 so that an ergonomic presentation of the corresponding item providing means or order collection means is achieved.

When the picking operation using the source item providing means S or order collection means O is finished, usually AMR 1A will leave the area 101B to transport source item providing means S to another virtual GTP for other order fulfilment or back to station 106 of DMS 104 for storage.

Alternatively, or additionally, AMR 1B may transport order collection means O to a different virtual GTP 101 for further picking or if the order is finalized to a packing and discharge area 108.

As such the functionality of the virtual GTP in connection with the whole system mimics that of a conventional one in terms of material flow with the advantage of flexibility. For example, if the source item providing means S is need as a virtual GTP right adjacent the virtual GTP where it is currently located, the AMR may transport it directly to that location without need for complicated routing on fixed conveyors.

Figure 3 shows a further example having a staggered arrangement of more than one virtual GTP picking station 101, especially one GTP 101C using a robotic picking device 103B. The AMR 1 are shown for better use of drawing space without mast 3, it is however present. The AMR 1 have all features and functions as described before.

Figure 3 indicates how material flow of the source item providing means S and order collections means O can be flexibly performed using the AMR 1 according to the invention by using shortest possible routing on the floor 102 of the order fulfilment area.

As before, the material handling flow of source items providing means S is indicated by solid arrows, that of order collection means O is indicated by hashed arrows.

As can be seen in connection with the flow of source item providing means S on AMRs 1A a waiting zone 110 allowing temporary buffering and re-sequencing of source item providing means S is provided, which allows to change timing and sequence of presentation at the virtual GTP as necessary.

It is also possible for an order collection means O on AMR 1B to be routed from a first virtual GTP station 101 being manually operated to a second virtual GTP station 101c being operated by a robotic picking device 103C. Such a robotic picking device will preferably use a camera-based onboard vision system implemented in local controls 111 to be able to independently recognize and grip items to pick these from the source item providing means and place them into the order collection means.

Source item providing means S may be routed and transported directly from one virtual GTP station 101 to the next virtual GTP station 101c without need for transportation via the DMS storage 104 or fixed conveyor routes.

Once AMR 1 have dropped off their load, they can be re-used as for any function. Also emptied source item providing means can dynamically be assigned to function as order collection means.

## Claims

1. Order fulfillment system with a floor-based order fulfilment area in which at least one picking station is arranged, wherein the picking station includes source item providing means and order collection providing means, such that orders may be fulfilled by picking from source item providing means and placed into order collection means and wherein the source item providing means and/or the order collection providing means are autonomous mobile robots (AMR) and/or automated guided vehicles (AGV) both having a transportation platform, for transporting source item providing means or order collection means, that are controlled by a controller to be present at a certain picking station in order to allow the picking operation, **characterized in that** the transportation platform of the autonomous mobile robots (AMR) and/or the automated guided vehicles (AGV) has an adaptive dynamic height and/or tilting and/or orientation adjustment mechanism that is controlled by the controller to dynamically present the source item providing means and the order collection means at an ergonomic respective efficient height and/or tilted angle and/or orientation to the manual operator and/or robotic picking device performing the picking operation.

2. Order fulfillment system according to claim 1, **characterized by** the controller being adapted to control the adaptive dynamic height mechanism to an ergonomic respective efficient height for the operator or robotic picking device also in dependence of item to be picked and/or order collection means.

3. Order fulfillment system according to claim 1or 2, **characterized by** the controller being adapted to control the adaptive dynamic height mechanism to lower transport platform such that it can pass underneath conventional infrastructure, such as conveyor lines.

4. Order fulfillment system according to any preceding claim, **characterized by** the controller being adapted to control the tilting mechanism to tilt the transportation platform in relation to a horizontal plane towards the manual operator and/or robotic picking device, preferably in four-directions in relation to a vertical central axis.

5. Order fulfillment system according to any preceding claim, **characterized by** the transportation platform having a rotation mechanism to rotate the transportation platform in relation to a vertical central axis.

6. Order fulfillment system according to any preceding claim, **characterized by** the transportation platform having a conveying means, preferably belt, rollers or ball (multidirectional).

7. Order fulfillment system according to any preceding claim, **characterized by** the controller being adapted to control the AMR and/or AGV to temporarily buffer and/or change sequence of source item means and/or order collection means in order to match a timing of pick and place operation involved in performing the picking operation.

8. Order fulfillment system according to any preceding claim, **characterized by** the at least one picking station having an additional robotic picking means.

9. Order fulfillment system according to any preceding claim, **characterized by** a storage for source items and the controller adapted to control the storage to provide the source item providing means with source items, preferably via discharge stations to AMR/AGV or via conveyors to the at least one picking station.

10. Order fulfillment system according to any preceding claim, **characterized by** the floor-based order fulfilment area having a flexible layout in respect of the position of the picking stations and/or routes of the AMR and/or AGV.

11. Order fulfillment system according to any preceding claim, **characterized by** the controller being adapted to increase or decrease the number of picking stations flexibly in respect to throughput to cope with fluctuation thereof.

12. Order fulfillment system according to any preceding claim, **characterized by** the controller being adapted to clear the floor-based order fulfilment area of picking stations and/or AMR and/or AGV for maintenance and/or cleaning purposes.
